# EUROPÄISCHE PATENTSCHRIFT

(11) **EP 0 468 259 B1**
(45) Veröffentlichungstag und Bekanntmachung des Hinweises auf die Patenterteilung: **28.12.1994**
(21) Anmeldenummer: 91111295.1
(22) Anmeldetag: 06.07.1991
(51) Int. Cl.: C09K 21/12

(54) **Intumeszenzträger und deren Verwendung**
Intumescent supports and their utilisation
Supports intumescents et leur utilisation

(30) Priorität: 21.07.1990 DE 4023310
(43) Veröffentlichungstag der Anmeldung: 29.01.1992
(73) Patentinhaber: BAYER AG, 51368 Leverkusen (DE)
(72) Erfinder: Von Bonin, Wulf, Dr., W-5068 Odenthal (DE)

(56) Entgegenhaltungen:
- EP-A- 0 245 207
- DE-A- 3 833 977
- FR-A- 2 359 194
- Derwent File Supplier WPIL, Accession number 84-148464 (24), Derwent Publications, London, UK

## Beschreibung

Wenn sich ein Brandschutzmaterial bei Beflammung unter Ausbildung eines die Wirkung des Feuers abweisenden Schaums aufbläht spricht man von Intumeszenz. Intumeszenz ist im allgemeinen eine für Zwecke des Brandschutzes erwünschte Materialeigenschaft. Als Intumeszenzträger bezeichnet man Materialien, die intumeszentes Verhalten aufweisen oder bewirken.

Viele Intumeszenz-Werkstoffe, z.B. Brandschutzanstriche und Brandschutzkitte, bilden bei Beflammung Carbonisierungsschäume aus, weil sie als Intumeszenzträger Kohlehydrate oder Phenol-, Polyurethan- oder Melaminharze in Kombination mit Phosphorsäurespendern enthalten.

Auch anorganische Materialien, beispielsweise wasserhaltige Alkalisilikate, können bei Beflammung aufschäumen und werden für Zwecke des Brandschutzes eingesetzt. Da diese Silikate jedoch Luft-, Feuchtigkeits- und/oder CO₂-empfindlich sind, sind sie als Intumeszensträger nur beschränkt brauchbar.

In organischen Intumeszenz-Brandschutzmaterialien fungieren zumeist carbonisierungsfähige Verbindungen in Kombination mit Phosphorverbindungen als Intumeszenzträger. Die bei Beflammung gebildeten Carbonisierungsschäume haben jedoch nur eine geringe mechanische Festigkeit, setzen der Flammenerosion nur geringen Widerstand entgegegen und sind oxidativ abbaubar.

Brandschutzmaterialien auf der Basis von Phosphonaten sind unter anderem aus den Dokumenten DE-A-3833977 und EP-A-0 245 207 bekannt.

Solche organischen Brandschutzmaterialien können auch zusätzlich Aluminiumhydroxid enthalten, dessen Aufgabe es ist, durch thermische Abspaltung von Wasser das Aufschäumen der Carbonisierungsschmelze zu unterstützen und Wärme abzuführen. Die Carbonisierung organischer Schmelzen wird durch Phosphorverbindungen begünstigt, die Phosphorsäure freisetzen. Deshalb werden als Phosphorsäurespender häufig Ammoniumphosphate eingesetzt, deren gute Wasserlöslichkeit jedoch einen erheblichen Nachteil darstellt.

Es besteht deshalb noch ein Bedürfnis nach nicht oxidativ abbaubaren Intumeszenzträgern, die unempfindlich gegen Luft, Feuchtigkeit und CO₂ sind, die bei Beflammung schon bei Temperaturen unter 200°C wirksam werden und die einen möglichst keramischen, mechanisch widerstandsfähigen Intumeszenzschaum bilden.

Es wurden nun Intumeszenzträger gefunden, die dadurch gekennzeichnet sind, daß sie Ammonium- und/oder Aminsalze von sauren Phosphaten, die sich von Orthophosphorsäure und Aluminiumhydroxid ableiten, enthalten, wobei das Molverhältnis von Aluminium zu Ammoniak und/oder Amin 3 bis 10:1 beträgt.

Solche Ammonium- und Aminsalze von sauren Aluminiumphosphaten sind nicht hygroskopisch und zur Bildung von Intumeszenzschäumen geeignet, obgleich die Aluminiumphosphate und Ammonium- und Aminphosphate selbst keine intumeszenten Eigenschaften aufweisen.

Besonders geeignet sind die Ammonium- und/oder insbesondere die Aminsalze von sauren Phosphaten von Aluminium, die pro Wertigkeitseinheit des Aluminiums 1 Mol Orthophosphorsäure in Form von H₂PO₄⁻-Gruppen enthalten. Gegebenenfalls können solche Salze in festem Zustand auch angelagertes Wasser (z.B. Kristallwasser) enthalten.

Bevorzugt sind Salze, die in wässrigem Medium hergestellt wurden, wobei zunächst auf ein Mol Aluminiumhydroxid, drei Mole Orthophosphorsäure eingesetzt wurden, so ein Aluminiumphoshat gebildet wurde und dieses, bezogen auf ein Mol eingesetztes Aluminiumhydroxid, mit 3 - 10, vorzugsweise 5 - 10 Molen Ammoniak und/oder Amin umgesetzt wurden.

Bevorzugt sind weiterhin Ammonium- und/oder Aminsalze von sauren Phosphaten, die der idealisierten Zusammensetzung der Formel (I) entsprechen

Al(OPO(OH)₂)₃ . x.3 A . yH₂O (I)

in der
- x: einen Zahlwert zwischen 0,1 und 6,
- A: Ammoniak, Amin oder Gemische davon und
- y: eine ganze Zahl von 0 bis 12 bedeuten.

Vorzugsweise steht x für einen Zahlenwert zwischen 1,5 und 4,5 und y für eine ganze Zahl von 0 bis 6.

A steht bevorzugt für Gemische aus Ammoniak und Aminen oder für Gemische aus verschiedenen Aminen oder für ein Amin. Die Einsatzmengen für Ammoniak und/oder Amin können gegebenenfalls auch so gewählt werden, daß x größer als 6 ist. Dann resultieren basische Produktlösungen.

Die erfindungsgemäßen Intumeszenzträger können gegebenenfalls mit anderen blähfähigen und/oder intumeszierenden Stoffen oder Zubereitungen kombiniert sein, beispielsweise mit Intumeszenzmassen, die auf Polyalkoholen basieren, mit blähfähigen Glimmern, mit Graphiten, mit Silikaten, mit Boraten und/oder mit synthetischen Borsilikaten. Solche Mischungskomponenten können z.B. insgesamt in einer Menge von 1 bis 99 Gew.-% in solchen Intumeszenzträgerkombinationen vorliegen.

Als Komponente A in Formel (I) kommen neben Ammoniak vorzugsweise Amine und Gemische aus Ammoniak mit einen oder mehreren Aminen oder Gemische mehrerer Amine infrage. Beispiele für Amine sind aliphatische Amine wie Mono-, Di-, Tri- und Polyalkylamine mit gleichen oder verschiedenen Alkyl-oder Alkylengruppen, die z.B. jeweils 1 bis 20 C-Atome aufweisen können. Vorzugsweise weisen die Alkyl- oder Alkylengruppen jeweils 1 bis 6 C-Atome auf und handelt es sich um Polyalkylenpolyamine. Als Beispiele seien genannt: Methylamin, Dimethylamin, Trimethylamin, Monoethanolamin, Diethanolamin, Triethanolamin, Methyl-oleylamin, N-Dimethylpropylendiamin, N-Aminoalkylpiperazine, Ethylendiamin, Hexamethylendiamin, Melamin, Diethylentriamin, Propylendiamin und Polyalkylenpolyamine mit beispielsweise 4 bis 8 Stickstoffatomen und Gemische davon mit Ammoniak. Besonders bevorzugt sind Alkanolamine mit insgesamt 2 bis 12 C-Atomen und insgesamt 3 bis 6 O-Atomen und neben Ethylendiamin insbesondere Polyethylenpolyamine mit 3 bis 7 N-Atomen, wie sie bei der technischen Herstellung von Ethylendiamin als Nebenprodukt anfallen, und Gemische davon mit Ammoniak.

Eine besondere Ausführungsform der vorliegenden Erfindung betrifft Intumeszenzträger, die als Komponente A Ethanolamin, Ethylendiamin, Polyethylenpolyamine mit 3 bis 7 N-Atomen oder Gemische dieser Amine mit Ammoniak enthalten.

Bei den Ammonium- und/oder Aminsalzen von sauren Phosphaten von Metallen der zweiten und/oder dritten Gruppe des Periodensystems der Elemente, die in erfindungsgemäßen Intumeszenzträgern enthalten sind, kann es sich insbesondere um saure Phosphate handeln, die sich von Orthophosphorsäure ableiten. Sie können sich aber auch von anderen Phosphor enthaltenden Säuren ableiten, z.B. von Pyrophosphorsäure, Polyphosphorsäure, phosphoriger Säure und Phosphinsäuren. Bevorzugt leiten sie sich von Orthophosphorsäure ab, wobei die Stöchiometrie so gewählt ist, daß das Metall, z.B. Magnesium, Calcium, Zink oder Aluminium, nicht an alle vorhandenen Säureäquivalente gebunden ist, sondern noch freie Säureäquivalente vorhanden sind, wie das z.B. bei den sekundären und primären Salzen der Orthophosphorsäure der Fall ist.

Die Herstellung der für erfindungsgemäße Intumeszenzträger benötigten Ammonium- und/oder Aminsalze kann z.B. in der Schmelze, in einem wasserfreien Lösungsmittel oder, besonders vorteilhaft, in wässrigem Medium erfolgen. Dabei kann man zunächst saure Phosphate herstellen, z.B. durch Umsetzung von Carbonaten, Oxiden oder Hydroxiden von Magnesium, Calcium, Zink oder Aluminium mit Orthophosphorsäure in wässrigem Medium, wobei 30 bis 75 gew.-%ige, insbesondere 45 bis 65 gew.-%ige Phosphat-Lösungen besonders gut handhabbar sind. Diese Lösungen können dann, gegebenenfalls unter Erwärmung oder Kühlung mit reinem, verdünntem oder in wässriger Lösung vorliegendem Ammoniak oder in entsprechender Form vorliegenden Aminen oder Gemischen davon umgesetzt werden. Hierbei ist es besonders vorteilhaft, entweder die saure Phosphatlösung zu vorgelegtem Ammoniak oder Amin unter gutem Rühren zulaufen zu lassen oder gemäß einer bevorzugten technischen Ausführungsform die saure und die basische Komponente des Reaktionsgemisches im gewünschten Mengenverhältnis kontinuierlich, gegebenenfalls unter Druck, einem Mischkopf zuzuführen, daraus in möglichst homogen vermischter Form auszutragen und gegebenenfalls in einem nachgeschalteten Aggregat, nachreagieren zu lassen. Man kann auch alle 3 Reaktionskomponenten gemeinsam umsetzen oder eine vorgelegte saure Phosphatlösung mit Ammoniak oder Aminen umsetzen.

Besonders gut lassen sich 45 bis 65 Gew.-%ige Phosphatlösungen handhaben, die mit vorgelegtem konz. wässrigem Ammoniak oder Aminen zu 30 bis 100 Gew.-%igen Zubereitungen umgesetzt werden. Nach dieser Verfahrensweise in wässrigem Medium lassen sich beim Einsatz von hohen Amin- oder Ammoniakmengen leicht mehr oder weniger klare Lösungen herstellen, z.B. mit Ammoniak oder Aminmengen in der Größenordnung von 0,5 bis 2 Basenäquivalenten pro freiem Säureäquivalent des Phosphats, einem Verhältnis, was bei Polyalkylenpolyaminen als bevorzugtem Amin auch in bevorzugtem Maße Anwendung findet.

Bei Verringerung der Ammoniak- oder Aminmenge verringert sich auch die Losungstendenz der gebildeten Salze, und es entstehen zunehmend viskosere Zubereitungen, die dann, wenn die Ammoniak- oder Aminmenge bei 0,5 bis 0,8 Äquivalenten liegt, auch in wiederum weniger viskose Dispersionen übergehen können.

Die erfindungsgemäßen Intumeszenzträger können die Ammonium- und/oder Aminsalze von sauren Phosphaten von Metallen der zweiten und/oder dritten Gruppe des Periodensystems der Elemente entweder in Form der so erhältlichen wässrigen Zubereitungen oder in getrockneter und gegebenenfalls gemahlener Form enthalten.

Auch bei pH-Werten von über 8 (nach der Zugabe von Ammoniak oder Amin), erhält man klare, wässrige Lösungen der Salze, die dann jedoch beim Trocknen in wasserunlösliche Formen und nicht hygroskopische übergehen können, wodurch sich günstige Handhabungs- und Einsatzmöglichkeiten als Intumeszenzträger ergeben können. Durch Variation der Ammoniak- und/oder Aminmenge ist es auch möglich, Übergangszustände zwischen Lösungen und Gelen zu erzeugen, deren Rheologie dem jeweiligen Einsatzverfahren angepaßt werden kann. Bei gegebenem Feststoffgehalt können klare niedrigviskose Lösungen, schmalzartige und gelartige Zustände und stabile Dispersionen erhalten werden. Diese verschiedenen Zustände und Zubereitungen können als solche Verwendung finden oder durch Trocknung, vorzugsweise bei Temperaturen unter 180°C, insbesondere bei Temperaturen von 45 bis 120°C, in Feststoffe überführt werden, die gegebenenfalls nach Mahlung als pulverförmige oder granulierte Intumeszenträger Verwendung finden können.

Die Trocknung kann bei veringertem oder normalen Druck durchgeführt werden. Bei einer Trocknung gehen die Ammonium- und/oder Aminsalze von sauren Phosphaten von Metallen der zweiten und/oder dritten Gruppe des Periodensystems der Elemente, gegebenenfalls unter teilweiser Abspaltung von Ammoniak oder Amin in Formen über, die gegenüber Wasser beständig sind. Sie werden dann nicht wieder aufgelöst, wenn sie mit Wasser in Berührung kommen oder in Wasser gelagert werden.

Die wässrigen oder die getrockneten pulverförmigen oder granulierten oder anderen Zubereitungen von Ammonium- und/oder insbesondere Aminsalzen von sauren Phosphaten von Metallen der zweiten und/oder dritten Gruppe des Periodensystems der Elemente können, gegebenenfalls mit wässrigen Bindemittel, beispielsweise zu Imprägnierungen, Mörteln, Kitten, Lacken und Beschichtungen verarbeitet werden, die auf dem Gebiet des Brandschutzes Verwendung finden können. Klare Gele, eine besondere Form wässriger Zubereitungen dieser Salze, insbesondere mit Ethanolamin als Aminkomponente, können als Zwischenschicht bei Brandschutzverglasungen und als flexible Brandschutzbeschichtung oder -imprägnierung bei Weichschaumstoffen infrage kommen.

Trockene Pulver können auch als Feuerlöschpulver eingesetzt oder als intumeszierende Feuerwiderstandsfähigkeit verleihende Pigmente in Lacke, Kitte oder Beschichtungen eingearbeitet werden. Desgleichen können sie zur Verbesserung des Brandverhaltens in Harze, beispielsweise in gegebenenfalls verschäumte Epoxidharze, Polyesterharze, Silikonharze, Polyurethanharze, Phenolharze oder sonstige Reaktionsharze eingearbeitet werden. Man kann sie auch in Thermoplaste wie Polyethylene, Polypropylene, Polyester, Polyacrylnitrile, Polyurethane, Acrylnitril-Butadien-Styrol-Polymerisate, Polyvinylchlorid, Polystyrole, Polycarbonate, Polyvinylether und Polysulfide einarbeiten, sowie in Kautschukmischungen (z.B. solche auf der Basis von Polydienen), in Ethylen-Copolymerisate mit Propylen, Acrylaten oder Vinylestern oder in Polymerblends oder in Schaumstoffe, z.B. in solche auf der Basis von Polyurethanen oder in Recyclingmischungen. Schließlich kann man auch Gemische erfindungsgemäßer Intumeszenzträger mit Holzspänen zu Spanplatten verpressen. Ebenfalls gut geeignet sind erfindungsgemäße Intumeszenzträger und deren Lösungen oder Dispersionen (z.B. in Wasser) als Bindemittel für Glas- und Mineralwolleplatten und -formkörper.

Im allgemeinen ist die Brandschutzwirkung um so besser, je höher der Anteil erfindungsgemäßer Intumeszenzträger ist.

Die erfindungsgemäßen Intumeszenzträger können gegebenenfalls kombiniert mit anderen Intumeszenzsystemen und/oder Brandschutzmaterialien eingesetzt werden.

Anzustreben sind im allgemeinen Gehalte von 10 bis 50 Gew.-%. In Einzelfällen können auch größere Mengenanteile in Betracht kommen, z.B. Gehalte von 50 bis 70 Gew.-%, sowie Mengen unter den Gew.-%, z.B. 3 bis 10 Gew.-%. Diese Mengenangaben beziehen sich auf den Gehalt erfindungsgemäßer Intumeszenzträger im Gemisch mit anderen Intumeszenzsystemen und/oder Brandschutzmaterialien.

Die Brandschutzwirkung erfindungsgemäßer Intumeszenzträger enthaltender Zubereitungen korreliert mit dem Verhalten der Imtumeszenzträger bei Beflammung oder Erhitzung. Im allgemeinen erweichen die Substanzen im Bereich zwischen 100 und 250°C und bilden eine bei zunehmender Temperatur zunächst flüssiger werdende Schmelze. Diese beginnt sich ab ca. 150 bis 200°C unter Gasentwicklung und Viskositätsanstieg zu zersetzen, wobei sich ein mit steigender Temperatur stabiler werdender Intumeszenzschaum bildet, der schließlich zu einem temperaturbeständigen keramischen Formkörper erstarrt. In Gegenwart organischer Matrixstoffe oder Bindemittel wird deren Carbonisierung und Krustenbildung durch die keramisierenden Intumeszenzträger begünstigt.

Auf der Stufe des beginnenden Erweichens bzw. Schmelzens können die Intumeszenzträger auch thermoplastisch verformt werden, wobei massive glasartige Formkörper erhältlich sind, die z.B. als optische Spezialgläser Verwendung finden können oder die gegebenenfalls zusätzlich, z.B. mit Kohlenstoff-Fasern, Glasfasern, Mineralfasern oder Füllstoffen verstärkt werden können. Solche Formkörper können dann bei Beflammung ihrerseits weiter aufschäumen und als Brandschutzelemente wirksam werden, z.B. in Kabelschotts oder Schaltkästen.

Es ist auch möglich, z.B. durch Abmischung der wässrigen Zubereitungen oder Pulver der erfindungsgemäßen Intumeszenzträger, diese mit Fasern, z.B. Kohlenstoff-Fasern, Glasfasern, Metallfasern oder Mineralfasern, mit Füllstoffen z.B. auf der Basis von Gesteinmehlen, Kreide, Quarz, Gläsern, Metallpulvern oder Kohle, zu kombinieren und dann durch eine Hitzbehandlung von 200 bis 600°C ansteigend, gegebenenfalls auch höhergehend, aufzuschäumen. Dabei sind mineralische Schaumstoffe von guter Wasser- und Hitzebeständigkeit mit Raumgewichten zwischen 0,1 und 0,9 g/cm³ und Formkörper mit entsprechenden Eigenschaften erhältlich.

Von besonderem Interesse ist in diesem Zusammenhang die Kombination der erfindungsgemäßen Intumeszenzträger mit blähfähigen Graphiten, beispielsweise mit Graphitverbindungen, die NOₓ und/oder SOₓ enthalten und beim Erhitzen auf ca. 150 bis 600°C auf ein Vielfaches des Ausgangsvolumens expandieren.

Solche Kombinationen sind leicht zugänglich durch Abmischung der wässrigen Zubereitungen der erfindungsgemäßen Intumeszenzträger mit blähfähigen Graphiten, deren Korngröße z.B. 0,1 bis 5, vorzugsweise 0,5 bis 3 mm betragen kann, und anschließendem Trocknen oder durch einfaches Abmischen trockener erfindungsgemäßer Intumeszenzträger in Pulverform mit den Blähgraphiten. Solche Kombinationen können beispielsweise bei 150 bis 700°C, vorzugsweise bei 200 bis 600°C, zu mechanisch stabilen Leichtformkörpern aufgeschäumt werden und können z.B. 1 bis 99, vorzugsweise 15 - 85 Gew.-% der erfindungsgemäßen Intumeszenzträger enthalten. Die Raumgewichte solcher Leichtformkörper können beispielsweise zwischen 0,03 und 0,9 g/cm³ liegen. Vorzugsweise liegen sie zwischen 0,09 und 0,3 g/cm³.

In diesen Kombinationen wässriger Formulierungen der erfindungsgemäßen Intumeszenzträger mit Blähgraphiten fungiert der Intumeszenzträger als ebenfalls blähfähiges Bindemittel für den Blähgraphit, sodaß beim Trocknen unter Formgebung massive blähfähige Formkörper erhalten werden können, die ebenfalls für Brandschutzzwecke oder als Vorläufer für Schaumstofformlinge Verwendung finden können. Ähnlich brauchbare massive, thermisch aufschäumbare Formkörper können erhalten werden, wenn man Abmischungen erfindungsgemäßer Intumeszenzträger in Pulverform mit Blähgraphiten bei Temperaturen zwischen beispielsweise 100 und 250°C verpreßt.

Es ist auch möglich, in die geschlossenen, jedoch für die Expansionsgase durchlässigen Formen die granulierten Kombinationen aus Blähgraphit und erfindungsgemäßen Intumeszenzträgern entweder in vorliegender massiver oder vorzugsweise vorexpandierter Form einzubringen und dann durch Hitzeeinwirkung unter Ausbildung eines Leichtformkörpers den Verschäumungs- und Blähprozeß bis zur Beendigung ablaufen zu lassen.

Bemerkenswert ist hierbei, daß durch die Kombination des Blähgraphits mit erfindungsgemäßen Intumeszenzträgern eine unerwartet wirkungsvolle Stabilisierung des Graphits gegen Oxidation bei Temperaturen bis ca. 800°C bewirkt wird. Während Formteile aus reinem Blähgraphit bei 700°C in sehr kurzer Zeit durch Oxidation an der Luft zerstört werden, wird bei Anwesenheit von beispielsweise 20 bis 45 Gew.-% erfindungsgemäßer Intumeszenträger auch nach Stunden noch kein wesentlicher oxidativer Abbau (z.B. gravimetrisch oder mechanisch gemessen) festgestellt.

Ganz allgemein haben erfindungsgemäße Intumeszenzträger die Vorteile, daß sie vielfach nicht empfindlich sind gegen Luft, Feuchtigkeit und Kohlendioxid, bei guter Ausbildung keramikartiger Intumeszenzschäume einen Widerstand gegen Flammenerosion bieten, wenig oder nicht wasserlöslich zubereitet werden können und schon bei Temperaturen unter 300°C einen keramischen, mechanisch und thermisch widerstandsfähigen Intumeszenzschaum bilden können.

Im folgenden beziehen sich Teile und Prozente auf das Gewicht, soweit nichts anderes angegeben ist.

### Beispiele

AP-Lösung bedeutet eine 50 bis 52 %ige wässrige Lösung des Salzes aus einem Mol Aluminiumhydroxid und drei Molen Orthophosphorsäure, die klar und dünnflüssig ist.

### Beispiel 1:

Unter intensivem Rühren wurden simultan in ein Reaktionsgefäß 100 Teile AP-Lösung und ein Gemisch aus 10 Teilen Ethylendiamin und 50 Teilen 24 %iger wässriger Ammoniaklösung eingetragen. Dabei bildete sich zunächst ein gelartiger Niederschlag, der sich beim Erwärmen unter Bildung einer klaren Lösung auf löste. Beim Abkühlen über Nacht auf Raumtemperatur erstarrte die klare Lösung, die beim Erhitzen auf 55°C wieder in den flüssigen Zustand überging.

Die Lösung im erstarrten oder im flüssigen Zustand kann als solche als Bindemittel für die Bindung von Blähgraphitpulvern, Keramikpulvern und -fasern sowie als Pigment bei Flammschutzanstrichen verwendet werden.
a) Die oben erhaltene Lösung wurde bei 80°C zur Trockene eingedampft und bei 120°C nachgetrocknet, wobei ein glasartiges, sprödes Material entstand, das nicht hygroskopisch war (Wasseraufnahme an der Raumluft unter 3 Gew.-%). Das so erhaltene Produkt wurde 19 Stunden lang in einer Kugelmühle fein vermahlen. Danach wurden 80 Teils des so erhaltenen Pulvers mit 50 Teilen handelsüblichem Bootslack und 50 Teilen Testbenzin vermischt. Das so erhaltene Anstrichmittel wurde auf eine Kiefernholzplatte so aufgestrichen, daß nach dem Antrocknen eine 1 mm dicke Beschichtung erhalten wurde. Bei Beflammung wurde die Kiefernholzplatte wirkungsvoll gegen Entflammung geschützt, weil sich aus der Beschichtung eine mehrere mm dicke und harte Schicht eines keramisierenden Intumeszenzschaums bildete.
b) 200 Teile des wie in a) beschrieben erhaltenen getrockneten Pulvers wurden auf einer Walze bei 80°C in 100 Teile eines elastomeren, handelsüblichen Ethylen-Vinylacetat-Copolymers (Levapren^{®}, Bayer AG) eingearbeitet, wobei ein flexibles opakes Kunststoffmaterial entstand, das bei Beflammung nicht weiterbrannte, einen LOI-Index von über 65 besaß und bei der Beflammung einen keramisch harten Intumeszenzschaum bildete. Ein derartiges Material kann zur Herstellung von Kabelmänteln verwendet werden.
c) 100 Teile des gemäß a) erhaltenen Pulvers wurden mit 60 Teilen handelsüblichen Glasfasern (milled fibers) gemischt und in einer auf 160°C beheizten Preßform bei 25 bar zu O-Ringen verpresst, die eine innere Weite von 0,5 cm, einen Aussendurchmesser von 1,45 cm und eine Dicke von 1,2 cm aufwiesen. Sie wurden zum Schutz von Kabelzuleitungen in einen Schaltkasten eingebaut und ergaben bei Beflammung einen Intumeszenzschaum, der die Öfffnungen um die Kabel herum zuschäumte, keine Teer-bildenden oder agressiven Gase absonderte und nahezu rauchlos blieb.
d) In eine Mischung aus 100 Teilen eines Glyzerin-gestarteten Polyethers aus Ethylenoxid und Propylenoxid mit einer OH-Zahl von 251, 2 Teilen Dimethylbenzylamin und 0,5 Teilen Wasser wurden 120 Teile des wie in a) beschrieben erhaltenen gemahlenen Pulvers eingemischt. Dann wurde diese Mischung bei Raumtemperatur homogen mit 63 Teilen Diphenylmethan-4,4-diisocyanat verrührt. Unter Erwärmung schäumte die Mischung in wenigen Minuten zu einem Schaumstoff mit elastischem Charakter auf, dessen Raumgewicht etwa 130 kg/m³ betrug.
   Eine aus diesem Schaumstoff ausgeschnittene kreisförmige Scheibe mit 10 cm Durchmesser und 1,5 cm Dicke wurde über einer Erdgas-betriebenen Bunsenflamme so angeordnet, daß der blaue Flammenkegel 5 mm unter der Schaumstofffläche war. Bei dieser Beflammung brannte der Schaumstoff nur über der Bunsenflamme. Sobald diese entfernt wurde, erlosch die Flamme in wenigen Sekunden.
   Die Beflammung wurde bei voller Leistung des Bunsenbrenners 90 Minuten fortgesetzt, wobei die Kreisscheibe nicht durchbrannte. Nach der Beflammung zeigte sich, daß der Schaumstoff in ein schaumstoffartiges geschwärztes, keramik-ähnliches Material übergegangen war und der Flammendurchtritt auf diese Weise wirksam verhindert worden war.
e) In ein Gemisch aus 100 Teilen des auch in d) verwendeten Polyethers und 61 Teilen Diphenylmethan-4,4-diisocyanat wurden 150 Teile des gemäß a) erhaltenen gemahlenen Produktes eingerührt. Es ergab sich ein thixotropes streichfähiges Gemisch, das auf einen Doppel-T-Träger aus Stahl in einer Dicke von 4 mm aufgebracht wurde. Die Beschichtung war nach 5 Stunden bei 20°C klebfrei und in 2 Tagen ausgehärtet.
   Nach 14 Tagen wurde der Träger in eine in Anlehnung an DIN 4102 gebaute Kleinbrandkammer eingebaut und nach der Brandkurve gemäß DIN 4102 beflammt. Nach einer Stunde wurde der Versuch abgebrochen und der Träger, dessen Maximaltemperatur im Beflammungsbereich 650°C erreicht hatte, ausgebaut. Es zeigte sich, daß der Träger jetzt komplett von einer keramisierten Schaumschicht eingehüllt war, deren Dicke zwischen 1,5 und 3 cm variierte, die während der Beflammung nicht abplatzte, sondern erst beim Abkühlen des Trägers.
f) 75 Teile handelsüblicher NOₓ-Blähgraphit wurden mit 50 Teilen einer Lösung angeteigt die aus 100 Teilen AP-Lösung und einem Gemisch aus 20 Teilen Ethanolamin und 80 Teilen 24 %iger wässriger Ammoniaklösung erhalten worden war, Dieses Gemisch wurde bei 80°C getrocknet und anschließend granuliert. Aus dem Granulat wurde auf einer Plattenpresse bei 125°C eine quadratische Platte mit 10 cm Kantenlänge und 20 g Gewicht gepreßt. Diese Platte mit bei Raumtemperatur mechanisch guter Festigkeit wurde in eine stählerne geschlossene Form zur Herstellung von Platten mit den Maßen 10 x 10 x 2 cm eingelegt, die eine Doppellage Schreibpapier als Trennschicht enthielt. Dann wurde die Form eine Stunde lang auf 600°C erhitzt. Nach dem Abkühlen wurde der Form eine Leichtstoff-Platte mit Deckschichten aus carbonisierten Papier entnommen. Die Platte war mechanisch stabil, hatte ein Raumgewicht von 0,1 g/cm³ und nicht-spröden, duktilen Charakter. Solche Platten können als Hitzeschutz, Sandwichkernlage und Schutz vor elektromagnetischen Wellen verwendet werden.
g) 20 Teile gemäß f) erhaltenes Granulat wurden in der auch in f) verwendeten Plattenform auf 600°C erhitzt. Aus der so erhaltenen Platte wurde ein Würfel von 2 cm Kantenlänge geschnitten und in einem Ofen bei Luftzutritt auf 700°C erhitzt. Nach 2 Stunden war die Würfelform noch vollständig erhalten.
   Ein gleichgroßer, nur aus expandiertem Blähgraphit hergestellter Würfel war nach entsprechender Behandlung im Ofen völlig verascht.
h) Auf einer Plattenpresse wurde bei 150°C gemäß a) erhaltenes gemahlenes Produktpulver zu einer Platte von 10 x 10 x 0,5 cm verpreßt. Ein aus dieser Platte geschnittener Würfel mit einer Kantenlänge von 0,5 cm wurde auf einem Drahtnetz von unten mit einer Erdgas-Bunsenflamme erhitzt. Dabei erweichte der Würfel und zersetzte sich dann unter Aufblähen, wobei sich nach Beendigung der Zersetzungsreaktion und der damit verbundenden Gasentwicklung ein keramikartiger Intumeszenzschaum bildete, der ein Volumen von etwa 400 % (bezogen auf den ursprünglichen Würfel) einnahm.
   Das zeigt an, daS gemäß a) erhaltene Pulver geeignet sind zur Herstellung von im Brandfalle keramisierenden Brandschutzkitten. Solche Brandschutzkitte kann man herstellen, indem man wässrige Bindemittel auf der Basis von Cellulose-Derivaten, Kautschuken, Siliconen, knetbaren Polyolefinwachsen, Kunststofflatices (Dispersionen), Bitumen oder Polyisobutylen mit solchen Imtumeszenzpulvern anteigt.
i) Versuch f) wurde wiederholt, wobei die Platte des Ausgangsmaterials (20 g) zunächst zerkleinert und bei 205°C vorexpandiert wurde. Dann wurde das vorexpandierte Material in die Form gefüllt und auf 600°C nacherhitzt. Es wurde eine Leichtstoffplatte erhalten mit vergleichbaren Eigenschaften wie die gemäß f) erhaltene Platte.

### Beispiel 2:

In ein Gemisch aus 10 Teilen Ethanolamin, 10 Teilen Aminoethylpiperazin und 80 Teilen 25 %igen wässrigen Ammoniak wurden unter gutem Rühren 150 Teile AP-Lösung eingerührt. Nach längerem Rühren wurde eine schwachbasische, sämige, gut streichfähige Zubereitung des gebildeten Salzes erhalten.

100 Teile dieser Zubereitung wurden mit 25 Teilen eines 50 %igen handelsüblichen Polyacrylatlatexes (Acralen^{®} AFR, Bayer AG) zu einer Streichfarbe verrührt und mit 5 Teilen eines Titandioxid-Farbpigmentes pigmentiert. Die so hergestellte Brandschutzfarbe ergab bei der Beflammung damit bestrichener Untergründe eine festhaftende, keramisierte und flammabweisende Schutzschicht.

Die streichfähige Zubereitung des gebildeten Salzes wurde bei Temperaturen bis zu 110°C getrocknet, wobei sich ein sprödes, gut mahlbares Material ergab, das analog Beispiel 1 a) bis 1 h) verwendet werden kann und zu vergleichbaren Ergebnissen führt.

### Beispiel 3:

Ein Gemisch aus 10 Teilen Triethylentetramin und 90 Teilen 24 %iger wässriger Ammoniak-Lösung wurde mit 200 Teilen AP-Lösung verrührt und bei 60°C mit einer Mischsirene homogenisiert. Nach dem Akühlen unter Rühren wurde eine viskose, gut streichfähige Dispersion erhalten. Mit dieser Dispersion wurde Holz angestrichen und Papier und Pappe beschichtet. Bei Beflammung entstand jeweils ein keramisierter Intumeszenzschaum, der einen guten Feuerschutz verlieh.

Durch Trocknung wurde aus der Dispersion ein sprödes Glas erhalten, das vermahlen wurde. So hergestelltes Pulver kann analog den Beispielen 1 a) bis 1 h) verwendet werden und führt zu vergleichbaren Ergebnissen.

### Beispiel 4:

100 Teile einer wässrigen Amin-Lösung gemäß Beispiel 3 wurden mit 300 Teilen AP-Lösung verrührt und bei 70°C in einer Mischsirene homogenisiert. So wurde eine im Vergleich zu Beispiel 3 höherviskose, jedoch noch streichfähige Salz-Gel-Dispersion erhalten. Durch Trocknung und Vermahlung wurde daraus ein Pulver erhalten, das analog den Beispielen 1 a) bis 1 h) eingesetzt werden kann und zu vergleichbaren Ergebnissen führte.

Alle Pulver gemäß den Beispielen 1, 3 und 4 waren nicht hygroskopisch (Wasseraufnahme unter 3 Gew-.% in 7 Tagen bei Raumtempeatur und 60 % rel. Luftfeuchtigkeit).

### Beispiel 5:

400 Teile AP-Lösung wurden bei 80°C mit 100 Teilen Ethylendiamin gut verrührt. Es wurde eine klare basische Produktlösung erhalten, die beim Auftrocknen ein sprödes, gut mahlbares Produkt ergab. Das Produktpulver war nicht hygroskopisch und intumeszierte bei Beflammung ohne wesentliche Rauchentwicklung auf ca. 400 Vol-% unter Ausbildung eines hart-festen Intumeszenzschaumes.

Die Produktlösung wurde analog zu Beispiel 3 zum Anstrich von Holz verwendet, das Produktpulver analog Beispiel 1 a) zu einem Lack verarbeitet, der zum Anstrich von Kiefernholz verwendet wurde und analog Beispiel 1 d) zur Herstellung eines Schaumstoffs. Bei Beflammung zeigten sich jeweils Effekte, die analog waren zu den in den angegebenen Beispielen beschriebenen. Die Intumeszenz war dabei ausgeprägter.

### Beispiel 6:

Es wurde wie in Beispiel 5 gearbeitet, jedoch 500 Teile AP-Lösung eingesetzt. Die erhaltene klare Produktlösung war erheblich viskoser als diejenige des Beispiels 5 und erstarrte beim Abkühlen. Analog Beispiel 5 bzw. 1 d) wurde ein Schaumstoff hergestellt, der wie in Beispiel 1 d) beschrieben getestet wurde und den Flammendurchtritt wirksam verhinderte.

### Beispiel 7:

450 Teile AP-Lösung wurden mit 100 Teilen eines handelsüblichen technischen Gemisches höherer Polyethylenpolyamine (Polyamin B 433, Bayer AG) bei 90°C verrührt. Es wurde eine viskose, klare Produktlösung erhalten, die beim Abkühlen zu einem klaren Gel erstarrte. Durch Trocknung und Mahlung wurde ein Produktpulver erhalten, das bei 120 - 200°C thermoplastisch verarbeitbar war und bei Beflammung eine Expansion auf 500 Vol.-% ergab unter Ausbildung eines harten, stabilen, flammabweisenden Intumeszenzschaumes. Das Pulver ist deshalb als Intumeszenzträger für feuerwidrige Anstriche, Kitte, Kunststoffe und Schaumstoffe verwendbar. Es bildete bei Beflammung nur untergeordnete Rauchanteile.

Aus dem Pulver wurde in einer beheizbaren Presse unter Vakuum bei 150°C und 160 bar eine 5 mm dicke Platte gepreßt. In heißem Zustand war diese Platte flexibel. Sie kann deshalb tiefgezogen, gebogen, verschweißt oder zu speziell geformten Elementen verarbeitet werden, die insbesondere im Elektroinstallationsbereich verwendet werden können. Außerdem kann sie für die Herstellung von optischen Fenstern, Linsen und Lichtleitelementen verwendet werden, insbesondere wenn man z.B. durch vorhergehende Destillation das eingesetzte Amin farblos gemacht hat.

Aus dem Pulver wurde auch analog Beispiel 1 d) ein Schaumstoff hergestellt, der bei einem Test analog Beispiel 1 d) analoge Ergebnisse erbrachte.

### Beispiel 8:

100 Teile AP-Lösung wurden bei 15°C mit 60 Teilen Melamin intensiv verrührt. Nach kurzer Zeit bildete sich ein fester Kuchen, der zerkleinert, getrocknet und vermahlen wurde. 120 Teile des so erhaltenen Produktpulvers wurden analog Beispiel 1 d) in einen Schaumstoff eingearbeitet. Die Beflammung einer Kreisscheibe aus solchem Schaumstoff analog Beispiel 1 d) ergab die Beständigkeit des Schaumstoffs gegen Durchbrennen.

Wenige mm dicke Schichten solchen flexiblen Schaumstoffs eignen sich als Brandschutzauflage für Schaumstoffpolster und Schaumstoffsitze.

### Beispiel 9:

400 Teile AP-Lösung wurden bei 85°C mit 100 Teilen Ethanolamin gut verrührt. Es wurde eine bei 80°C gut fließfähige, wasserklare Lösung erhalten, die beim Abkühlen zu einem ebenfalls wasserklaren hochviskosen gelartigen Produkt erstarrte. Diese Zubereitung kann als Zwischenschicht in gelhaltigen Brandschutzverglasungen verwendet werden.

Nach dem Trocknen bei 120°C ging das Gel in eine plastische Masse über, die mit Glasfasern vermischt und als Brandschutzkitt verwendet werden kann.

Bei Beflammung zersetzte sich das plastische Material und bildete ohne wesentliche Rauchbildung bei einer Expansion auf ca. 700 Vol.-% einen harten, feuerabweisenden Intumeszenzschaum.

### Beispiel 10:

100 Teile Ethanolamin wurden mit 500 Teilen AP-Lösung bei 90°C intensiv verrührt. Es bildete sich eine nahezu klare, bei Raumtemperatur gelartige, hochviskos-fließfähige Losung. Diese wurde 3 Minuten lang am Rückfluß gekocht, wobei sie auch bei Raumtemperatur einen streichfähigen Charakter erhielt.
a) Diese Lösung trocknete unter Ausbildung eines klaren und trocken-klebfreien Films, was sie als Beschichtungsmaterial für textile Gebilde geeignet macht, die flammwidrig ausgerüstet werden sollen, ohne ihre Flexibilität zu verlieren.
   Mit dieser Lösung wurden Holz, Papier, Pappe, die Oberfläche eines Polyurethan-Weichschaums und eine Aluminiumplatte bestrichen. Bei Beflammung bildete sich jeweils ein harter, feuerabweisender Intumeszenzschaum aus.
   100 Teile dieser Lösung wurden mit 30 Teilen Glasfasern (MF-Glasfaser der Bayer AG) verknetet und getrocknet. Das getrocknete Material wurde granuliert.
   40 Teile des Granulats wurden in eine Plattenform gemäß Beispiel 1f) eingefüllt und in dieser Form 60 Minuten auf 600°C erhitzt. Anschließend wurde der Form eine keramisierte Platte aus dem gebildeten Intumeszenzschaum entnommen, die ein Raumgewicht von 0,2 g/cm³ aufwies. Sie war durch den Kohlenstoffgehalt dunkel verfärbt, konnte spanabhebend bearbeitet werden und war wasserfest, blieb bei einer Wasserlagerung bei Raumtemperatur über 7 Tage stabil.
b) Die Verdünnung der Lösung mit Wasser im Verhältnis 1:1 führt zu einer niedriger viskosen, streichfähigen thixotropen Gel-Dispersion, in die sich leicht Glasfasern oder Pigmente einarbeiten lassen.
   Als besonders gut zur Erzielung brandabweisender Mörtel und Beschichtungen geeignetes Pigment wurde erhalten durch Mischung gleicher Teile konzentrierten wäßrigen Ammoniak und AP-Lösung mit anschließendem Trocknen bei 100°C.
c) Die Produktlosung wurde bei 80°C im Dünnschicht-Verfahren getrocknet, wobei ein thermoplastisch verarbeitbares Material erhalten wurde. Dieses wurde mit 15 % Glasfasern bei 160°C vermischt und mittels Schmelzkalandrierung als 1,5 mm dicke Schicht auf ein Baumwollnesseltuch aufgebracht. Das Tuch behielt seine Flexibilität. Bei Beflammung brannte es nicht durch, sondern an der Beflammungsstelle bildete sich eine keramisierende Intumeszenzschicht aus, die den Durchtritt von Feuer verhinderte. Das trockene, plastische verformbare Produkt begann bei Beflammung zunächst zu erweichen und dann unter Gasentwicklung und Ausbildung eines hart keramisierten Intumeszenzschaums unter ca. 700 Vol.-%iger Expansion aufzuschäumen.
d) Analog Beispiel 1 f) wurde die Produktlösung mit Blähgraphit vermischt und wie dort beschrieben zu einer Platte verarbeitet. Bei Beflammung wurden die expandierten Blähgraphit-Partikel gut zusammengehalten und staubten nicht ab.
e) 100 Teile der Produktlösung wurden mit Ammoniak auf einen pH-Wert von 7,5 eingestellt und bei Raumtemperatur mit 100 Teilen einer 50 %igen handelsüblichen Dispersion eines weichen Butadien-Styrol-Copolymerisats (Baystal^{®} P 1300, Bayer AG) verknetet. Es wurde ein gut kartuschengängiger Brandschutzkitt erhalten, der zur elastischen Ausfüllung von Fugen verwendet wurde. Bei Beflammung der Fuge bildete sich ein keramisierender Intumeszentschaum aus, der den Durchtritt von Feuer verhinderte.

### Beispiel 11:

Es wurde analog Beispiel 9 gearbeitet, jedoch wurde statt Ethanolamin Diethanolamin verwendet. Es wurde eine Produktlösung erhalten, die im Hinblick auf Verarbeitbarkeit und Brandschutz analoge Eigenschaften aufwies wie das Produkt aus Beispiel 9. Ein Test entsprechend Beispiel 10 b) ergab eine analoge Intumeszenzschaumbildung.

### Beispiel 12:

312 Teile Aluminiumhydroxid wurden in 1120 Teilen Wasser bei 90°C und 1392 Teilen 85 Gew.-%iger Orthophosphorsäure gelost. Zu 100 Teilen dieser Losung wurden 39 Teile Ethanolamin hinzugefügt, wobei sich eine viskose Lösung des entsprechenden Aluminium-Ammonium-Phosphates bildete (ca. 60 Gew.-%ig).

Mit 100 Teilen dieser Lösung wurden 540 Teile einer üblichen Spanmischung, wie sie für die Deckschicht von Holzspanplatten eingesetzt wird (Fichtenholz-Deckschichtspan, 6 % Feuchte) auf einem Lödige-Mischer vermischt. Anschließend wurde die mit der Aluminium-Ammonium-Phosphat-Lösung versetzte Spanmischung auf einer beheizten Etagenpresse bei 175°C und 35 bar zu 1,2 cm dicken Platten verpreßt. Die Preßzeit betrug 15 Minuten.

Die erhaltenen Platten erwiesen sich nach dem Abkühlen als formstabil, sie können genagelt und geschraubt werden. Ihre Festigkeit ist für Zwecke des Feuerschutzes ausreichend gut.

Bei der Beflammung mit einer Bunsenflamme zeigte sich, daß sie nicht zum Brennen oder Nachglühen neigen und sich eine feuerhemmende und isolierende Carbonisierungsstruktur ausbildet.

### Beispiel 13:

Es wurde wie in Beispiel 15 gearbeitet, jedoch anstelle von 39 Teilen Ethanolamin 40 Teile Amingemisch wie in Beispiel 7 verwendet. In analoger Weise zu Beispiel 15 wurde eine Spanplatte hergestellt. Diese zeigte analoge Eigenschaften wie die gemäß Beispiel 15 hergestellte Spanplatte.

### Beispiel 14:

100 Teile AP-Lösung wurden mit 100 Teilen 24 %iger, wäßriger Ammoniaklösung bei 70°C zu einer klaren Lösung verrührt. Dann wurden 20 Teile des Amingemisches wie in Beispiel 7 hinzugefügt und wiederum zu einer klaren Lösung verrührt. Diese wurde als Bindemittel bei der Mineralwollplatten-Fertigung eingesprüht, so daß sich ein Bindemittelanteil von 2,5 Gew.-% ergab. Es erfolgte eine gute Faserbindung, die im Gegensatz zu üblicherweise verwendeten Phenolharzbindern nahezu keine Brandlast einbrachte. Erforderlichenfalls kann die Bindemittellösung durch Strippen von überschüssigem Ammoniak befreit werden, wobei dann praktisch keine Geruchsbelästigung mehr auftritt.

Vergleichbare Ergebnisse wurden erhalten, wenn man bei der Bindemittelzubereitung eine erfindungsgemäße Lösung wie in Beispiel 10b) verwendete.

### Beispiel 15:

a) 100 Teile AP-Lösung wurden mit 100 Teilen 24 %igem wäßrigem Ammoniak zu einer klaren Lösung verrührt. Diese wurde bei 120°C getrocknet. Es wurde ein farbloses Pulver erhalten, das noch in einer Kugelmühle gemahlen wurde.
b) Der gemäß a) erhaltenen klaren Lösung wurden noch in der Wärme 15 Teile Triethylentetramin zugesetzt und gerührt bis die Lösung wieder klar war. Dann wurde bei 120°C getrocknet und anschließend vermahlen.
c) 100 Teile AP-Lösung wurden bei 100°C mit 25 Teilen eines Gemisches aus 40 % Triethylentetramin, 30 % Tetraethylenpentamin und 30 % Pentaethylenhexamin bis zur Bildung einer klaren Lösung verrührt. Dann wurde bei 120°C getrocknet und ebenfalls vermahlen.
   In einer Blechform wurden aus jedem der drei Pulver in einer Pillenpresse hergestellte 0,5 g-Pillen deponiert und 30 Minuten in einen auf 800°C vorgeheizten Ofen gebracht. Dann wurde das Blech aus dem Ofen genommen und das Volumen des jeweils gebildeten Intumeszenzschaumes beurteilt. In fünf aufeinanderfolgenden Versuchen wurden folgende mittlere Expansionen der Pillen festgestellt:
   - Pillen aus Pulver a):: ca. 150 Vol.-%
   - Pillen aus Pulver b):: ca. 350 Vol.-%
   - Pillen aus Pulver c):: ca. 600 Vol.-%.

   In allen Fällen hatte sich ein mechanisch fester keramisierter Intumeszenzschaum gebildet, der im Fall c) besonders feinporig und gleichmäßig war.

## Patentansprüche

1. Intumeszenzträger, dadurch gekennzeichnet, daß sie Ammonium- und/oder Aminsalze von sauren Phosphaten, die sich von Orthophosphorsäure und Aluminium-hydroxid ableiten, wobei das Molverhältnis von Aluminium zu Ammoniak und/oder Amin 3 bis 10:1 beträgt.

2. Intumeszenzträger nach Anspruch 1, dadurch gekennzeichnet, daß sie als Ammonium- und/oder Aminsalze von sauren Phosphaten von Aluminium solche der idealisierten Zusammensetzung der Formel (I) enthalten
Al(OPO(OH)₂)₃ . x.3 A . yH₂O (I)
in der
x einen Zahlwert zwischen 0,1 und 6,
A Ammoniak, Amin oder Gemische davon und
y eine ganze Zahl von 0 bis 12 bedeuten.

3. Intumeszenzträger nach Ansprüchen 1 und 2, dadurch gekennzeichnet, daß sie als Amine Mono-, Di-, Tri- und/oder Polyalkylamine mit Alkyl- oder Alkylengruppen mit jeweils 1 bis 20 C-Atomen enthalten.

4. Intumeszenzträger nach Ansprüchen 1 bis 3, dadurch gekennzeichnet, daß sie als Amin Ethanolamin, Ethylendiamin, Polyethylenpolyamine mit 3 bis 7 N-Atomen oder Gemische dieser Amine mit Ammoniak enthalten.

5. Intumeszenzträger nach Ansprüchen 1 bis 4, dadurch gekennzeichnet, daß sie kombiniert sind mit Intumeszenzmassen, die auf Polyalkoholen basieren, mit blähfähigen Glimmern, mit Graphiten, mit Silikaten, mit Boraten und/oder mit synthetischen Borsilikaten.

6. Verwendung von Intumeszenzträgern nach Ansprüchen 1 bis 5 zur Herstellung von Imprägnierungen, Mörteln, Kitten, Lacken, Beschichtungen, Brandschutzverglasungen, Feuerlöschpulvern, Thermoplasten, Spanplatten, Glaswollformkörpern, Mineralwollformkörpern, Spezialgläsern und Schaumstoffen.

7. Formkörper, dadurch gekennzeichnet, daß sie aus Intumeszenzträgern gemäß Ansprüchen 1 bis 5, gegebenenfalls zusammen mit Füllstoffen, bestehen.

8. Kombinationen, die Intumeszenzträger gemäß den Ansprüchen 1 bis 5 und blähfähige Graphite enthalten.

## Claims

1. Intumescent supports, characterized in that they comprise ammonium and/or amine salts of acid phosphates which are derived from orthophosphoric acid and aluminium hydroxide, the molar ratio of aluminium to ammonia and/or amine being 3 to 10:1.

2. Intumescent supports according to Claim 1, characterized in that they comprise, as ammonium and/or amine salts of acid phosphates of aluminium, those of the idealized composition of the formula (I)
Al(OPO(OH)₂)₃ ^{.} x^{.}3 A ^{.} yH₂O (I)
in which
x denotes a numerical value of between 0.1 and 6,
A denotes ammonia, amine or mixtures thereof and
y denotes an integer from 0 to 12.

3. Intumescent supports according to Claims 1 and 2, characterized in that they comprise, as amines, mono-, di-, tri- and/or polyalkylamines having alkyl or alkylene groups with in each case 1 to 20 C atoms.

4. Intumescent supports according to Claims 1 to 3, characterized in that they comprise, as the amine, ethanolamine, ethylenediamine, polyethylenepolyamines having 3 to 7 N atoms or mixtures of these amines with ammonia.

5. Intumescent supports according to Claims 1 to 4, characterized in that they are combined with intumescent compositions which are based on polyalcohols, with expandable micas, with graphites, with silicates, with borates and/or with synthetic borosilicates.

6. Use of intumescent supports according to Claims 1 to 5 for the preparation of impregnations, mortars, putties, paints, coatings, fireproof glazings, fire extinguishing powders, thermoplastics, chipboards, glass wool-type articles, mineral wool-type articles, special glasses and foams.

7. Shaped articles, characterized in that they comprise intumescent supports according to Claims 1 to 5, if appropriate together with fillers.

8. Combinations which comprise the intumescent supports according to Claims 1 to 5 and expandable graphites.

## Revendications

1. Véhicules intumescents, caractérisés en ce qu'ils contiennent des sels d'ammonium et/ou d'amines de phosphates acides dérivant de l'acide orthophosphorique et de l'hydroxyde d'aluminium, à un rapport molaire aluminium/ammoniaque et/ou amine de 3 à 10:1.

2. Véhicules intumescents selon revendication 1, caractérisés en ce qu'ils contiennent en tant que sels d'ammonium et/ou d'amines de phosphates acides de l'aluminium, des sels de composition idéalisée répondant à la formule (I):
Al(OPO(OH)₂)₃ . x.3 A . yH₂O (I)
dans laquelle
x est un nombre allant de 0,1 à 6,
A représente l'ammoniac, une amine ou un mélange de ces composants et
y est un nombre entier allant de 0 à 12.

3. Véhicules intumescents selon les revendications 1 et 2, caractérisés en ce qu'ils contiennent en tant qu'amines des mono-, di-, tri- et/ou polyalkylamines contenant des groupes alkyle ou alkylène de chacun 1 à 20 atomes de carbone.

4. Véhicules intumescents selon les revendications 1 à 3, caractérisés en ce qu'ils contiennent en tant qu'amine l'éthanolamine, l'éthylènediamine, une polyéthylènepolyamine contenant 3 à 7 atomes d'azote ou un mélange de ces amines avec l'ammoniac.

5. Véhicules intumescents selon les revendications 1 à 4, caractérisés en ce qu'ils sont combinés avec des masses intumescentes à base de polyalcools, avec des micas gonflables, avec des graphites, avec des silicates, avec des borates et/ou avec des borosilicates synthétiques.

6. Utilisation des véhicules intumescents selon les revendications 1 à 5 pour la réalisation d'imprégnations, la préparation de mortiers, de mastics, de peintures, l'application de revêtements, la fabrication de vitrages de protection contre l'incendie, la préparation de poudres extinctrices, la préparation de résines thermoplastiques, la fabrication de panneaux de copeaux, de corps moulés en laine de verte, de corps moulés en laine minérale, de vertes spéciaux et de mousses.

7. Corps moulés, caractérisés en ce qu'ils consistent en véhicules intumescents selon les revendications 1 à 5, le cas échéant avec des matières de charge.

8. Combinaisons contenant des véhicules intumescents selon les revendications 1 à 5 et des graphites gonflables.
